# DEMANDE DE BREVET EUROPEEN

(11) **EP 3 121 944 A1**
(43) Date de publication de la demande: **25.01.2017**
(21) Numéro de dépôt: 16180834.0
(22) Date de dépôt: 22.07.2016
(51) Int. Cl.: H02K 11/215, H02K 29/08, H02K 11/33, H02K 5/10, H05K 5/00, H02K 5/22

(54) **BOITIER D'UNITE ELECTRONIQUE DE CONTROLE**

(30) Priorité: 24.07.2015 FR 1557100
(71) Demandeur: Valeo Systèmes de Contrôle Moteur, 95800 Cergy Saint Christophe (FR)
(72) Inventeur: LUCY, Anthony, 95280 JOUY LE MOUTIERS (FR)
(74) Mandataire: Novembre, Christophe Adelphe

(57) **Abrégé**

La présente invention concerne un boîtier (1) destiné à recevoir une unité électronique, ledit boîtier (1) comprenant un socle externe (101) s'étendant sensiblement dans un plan principal (X-Y), et une excroissance (17) faisant saillie, notamment vers l'extérieur du boîtier (1), hors du plan (X-Y) dudit socle externe (101), ladite excroissance (17) comprenant un logement interne (19) destiné à recevoir un composant (21) de l'unité électronique, caractérisé en ce que le boîtier (1) comprend une ouverture dans le socle externe (101) et au moins une rainure destinée à recevoir une carte électronique secondaire sur laquelle le composant de l'unité électronique est disposé, ladite carte électronique secondaire venant se glisser dans la, au moins une, rainure.

## Description

La présente invention concerne le domaine des unités électroniques de commande des machines électriques, notamment dans les véhicules automobiles.

Les unités électroniques de commande sont utilisées pour commander les machines électriques, en particulier les machines électriques tournantes. L'unité électronique de commande comprend par exemple un onduleur qui permet de convertir une tension continue fournie par une batterie en une tension alternative permettant de faire tourner la machine électrique.

Cependant, afin d'obtenir un fonctionnement correct de la machine électrique, il est nécessaire pour l'unité électronique de contrôle de connaître certains paramètres de la machine électrique et notamment la position du rotor. Pour cela, il est connu d'utiliser un aimant disposé sur le rotor et un capteur associé à l'unité électronique de commande positionné à proximité de l'aimant pour détecter la position de l'aimant. Généralement, l'unité de contrôle est positionnée dans le prolongement de l'axe de rotation du moteur, c'est-à-dire suivant une direction axiale du moteur. Or, dans certains cas, du fait du manque de place, il n'est pas possible de positionner l'unité électronique de commande de manière axiale en face du rotor de la machine électrique. Il se pose alors également le problème du positionnement du capteur par rapport à l'aimant.

Il convient dans ce cas de trouver une solution pour permettre une mesure fiable de la position du rotor. De plus, une contrainte supplémentaire est la nécessité de protéger l'unité électronique de commande, et notamment le capteur, d'éventuels impuretés ou liquides provenant de la machine électrique afin de permettre un fonctionnement fiable et durable de l'unité électronique de commande.

A cet effet, la présente invention a pour objet un boîtier destiné à recevoir une unité électronique, ledit boîtier comprenant un socle externe s'étendant sensiblement dans un plan principal, le boîtier comprenant également une excroissance faisant saillie, notamment vers l'extérieur du boîtier, hors du plan dudit socle externe, ladite excroissance comprenant un logement interne destiné à recevoir un composant de l'unité électronique.

L'excroissance du boîtier et son logement interne permettent un positionnement précis du composant de l'unité électronique.

Selon un autre aspect de la présente invention, l'excroissance vient de matière avec le boîtier.

Selon un aspect supplémentaire de la présente invention, l'excroissance s'étend selon un plan secondaire transversal, notamment sensiblement perpendiculaire, par rapport au plan principal.

Selon un aspect additionnel de la présente invention, le logement interne comprend une ouverture dans le socle externe et au moins une rainure destinée à recevoir une carte électronique secondaire sur laquelle le composant de l'unité électronique est disposé, ladite carte électronique secondaire venant se glisser dans la, au moins une, rainure.

L'ensemble carte-rainures permet de positionner la carte dans le logement interne et assure un bon maintien du composant, notamment vis-à-vis des vibrations ou mouvement du boitier.

Selon un autre aspect de la présente invention, le logement interne comprend deux rainures disposées en vis-à-vis dans lesquelles viennent s'insérer les bords de ladite carte électronique secondaire.

Selon un aspect supplémentaire de la présente invention, la, au moins une, rainure s'étend sensiblement selon le plan secondaire transversal.

Selon un aspect additionnel de la présente invention, le logement interne comprend une première partie et une deuxième partie, la première partie ayant une largeur inférieure à la largeur de la seconde partie, ladite première partie étant disposée vers l'extrémité distale de l'excroissance du boîtier.

La présente invention concerne également une unité électronique de commande d'une machine électrique, ladite unité électronique de commande comprenant un circuit électronique et un composant logés dans un boîtier, ledit composant étant disposé dans le logement interne de l'excroissance du boîtier.

Selon un autre aspect de la présente invention, le composant est un capteur déporté par rapport au circuit électronique.

Selon un aspect supplémentaire de la présente invention, le capteur est destiné à mesurer la position d'un rotor de la machine électrique.

Selon un aspect additionnel de la présente invention, le composant est implémenté sur une carte électronique secondaire connectée au circuit électronique.

Selon un autre aspect de la présente invention, la carte électronique secondaire est fixée dans le logement interne par collage.

Selon un aspect supplémentaire de la présente invention, la carte électronique secondaire est fixée dans le logement interne par une bride de fixation.

Selon un aspect additionnel de la présente invention, la bride de fixation est destinée à être fixée de part et d'autre de l'ouverture du logement interne et à venir recouvrir la carte électronique secondaire pour la maintenir en position dans le logement interne.

Selon un autre aspect de la présente invention, la carte électronique secondaire est fixée dans le logement interne par un élément d'encliquetage.

Selon un aspect supplémentaire de la présente invention, l'élément d'encliquetage comprend une partie flexible comprenant un rebord à son extrémité libre, ledit rebord étant destiné à venir en prise avec la carte électronique secondaire pour la maintenir en position dans le logement interne.

La présente invention concerne également un ensemble comprenant une machine électrique et une unité électronique de commande, ladite machine électrique comprenant un châssis et ladite unité électronique de commande étant fixée sur le châssis de ladite machine électrique.

Selon un autre aspect de la présente invention, l'unité électronique de commande est positionnée de manière radiale par rapport à la machine électrique notamment dans un plan parallèle et décalé par rapport à un axe de rotation de la machine électrique.

Selon un aspect additionnel de la présente invention, l'excroissance fait saillie vers un rotor de la machine électrique.

Selon un aspect supplémentaire de la présente invention, la machine électrique comprend un élément sensible placé au niveau d'un rotor de ladite machine électrique et dans lequel l'excroissance s'étend vers l'axe dudit rotor de sorte que le composant est disposé en regard de l'élément sensible, ledit composant étant un capteur configuré pour déterminer une position dudit élément sensible.

La forme spécifique du boîtier permet une disposition radiale de l'unité électronique de commande par rapport à la machine électrique tout en assurant une mesure précise de la position du rotor grâce au capteur disposé dans le logement interne de l'excroissance.

Selon un autre aspect de la présente invention, le boîtier comprend au moins deux plots de positionnement destinés à venir se placer dans des orifices complémentaires d'un support lié au châssis de la machine électrique.

Selon un aspect supplémentaire de la présente invention, les plots de positionnement sont disposés à proximité et de part et d'autre de l'excroissance du boîtier.

Les plots de positionnement permettent d'améliorer encore la précision du positionnement du capteur par rapport à la machine électrique.

Selon un aspect additionnel de la présente invention, les plots de positionnement viennent de matière avec le boîtier.

Selon un autre aspect de la présente invention, le boîtier est en matière plastique et est réalisé par injection.

L'utilisation du boîtier plastique obtenu par injection permet de réaliser les formes complexes du boîtier de manière simple tout en limitant le nombre de pièces nécessaire au boîtier.

Selon un aspect supplémentaire de la présente invention, le boîtier est métallique et est réalisé par moulage sous pression.

D'autres caractéristiques et avantages de l'invention apparaîtront dans la description qui va maintenant en être faite, en référence aux dessins annexés qui en représentent, à titre indicatif mais non limitatif, des modes de réalisation possibles.

Sur ces dessins:
- la figure 1 représente un schéma d'une partie d'une unité de commande électronique et de son boîtier de protection à l'état ouvert;
- la figure 2 représente un schéma d'une unité de commande électronique et de son boîtier de protection;
- la figure 3 représente un schéma d'une carte électronique et d'une carte électronique secondaire ;
- la figure 4 représente une vue en coupe de l'excroissance du boîtier, de la carte électronique et de la carte électronique secondaire ;
- La figure 5 représente une vue de dessus de l'ouverture de l'excroissance du boîtier et de la carte électronique secondaire ;
- La figure 6 représente un schéma du boîtier de l'unité de commande assemblé à une machine électrique
- La figure 7 représente un schéma d'un mode de réalisation de l'unité électronique et de son boîtier ;
- La figure 8 représente un schéma d'un autre mode de réalisation de l'unité électronique et de son boîtier.

Sur ces figures, les mêmes numéros de référence désignent des éléments ayant une fonction identique.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

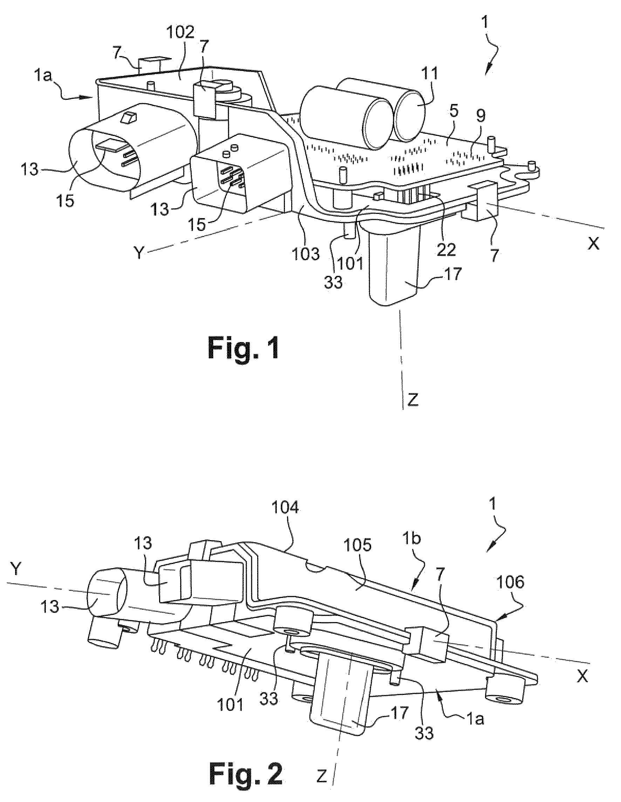

Les figures 1 et 2 représentent un schéma d'un boîtier de protection 1 d'une unité électronique, le boîtier 1 comprenant une première partie 1a et une deuxième partie 1b représentée sur la figure 2 qui vient se fixer sur la première partie 1a. La première partie 1a comprend un socle externe 101 qui s'étend sensiblement selon un plan principal X-Y et une première 102 et une deuxième 103 parois latérales du boîtier 1. La deuxième partie 1b du boîtier 1 comprend un couvercle 104 qui s'étend de manière sensiblement parallèle au socle externe 101 lorsque les deux parties la et 1b du boîtier 1 sont assemblées et une troisième 105 et une quatrième 106 parois latérales du boîtier 1. Cependant, il est également possible de rattacher une seule ou l'ensemble des parois latérales 102, 103, 105, 106 à l'une des parties 1a ou 1b du boîtier 1. La fixation entre la première la et la deuxième partie 1b est par exemple réalisée par des éléments d'encliquetage 7 mais d'autres moyens de fixation connus de l'homme du métier sont également envisageables. Le boîtier 1 a par exemple une forme générale parallélépipédique. Le boîtier 1 renferme l'unité électronique 5.
L'unité électronique 5 comprend par exemple une carte électronique ou circuit imprimé 9 sur lequel sont disposés des composants électroniques 11 et qui s'étend principalement selon le plan X-Y.

Le boîtier 1 comprend également des ouvertures 13 au niveau de ses parois latérales, notamment la paroi 103 dans le cas présent, au niveau desquelles sont logés des connecteurs 15 de l'unité électronique 5.

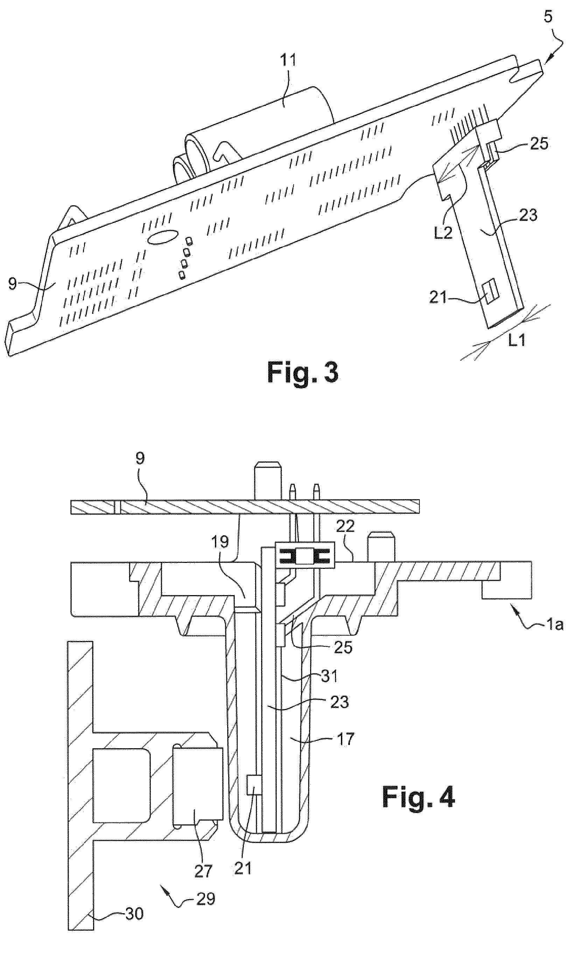

Le boîtier 1 comprend également une excroissance 17 faisant saillie, notamment vers l'extérieur, hors du plan principal X-Y du boîtier 1. L'excroissance 17 est par exemple positionnée sur le socle externe 101 du boîtier 1 et s'étend selon un plan secondaire transversal au plan principal X-Y du boîtier 1. L'excroissance 17 s'étend par exemple selon l'axe Z perpendiculairement au plan principal X-Y. L'excroissance 17 a par exemple une forme sensiblement parallélépipédique. L'excroissance 17 renferme un logement interne 19, visible sur la figure 4, destiné à recevoir un composant électronique 21 de l'unité électronique 5. L'excroissance comprend également une ouverture 22 débouchant dans le socle du boîtier 1.

La figure 3 représente l'unité électronique 5 comprenant la carte électronique 9 et le composant électronique 21 disposé sur une carte électronique secondaire 23 connectée à la carte électronique 9 par des liaisons électriques 25 qui passent à travers l'ouverture 22. Ce composant électronique 21 est par exemple un capteur déporté par rapport à la carte électronique 9 et notamment un capteur configuré pour détecter le positionnement d'un élément sensible. En particulier l'élément sensible peut être un aimant disposé par exemple sur le rotor 27 d'une machine électrique 29 pilotée par l'unité électronique 5 comme représenté sur la figure 4 qui représente une vue en coupe d'une partie du boîtier 1 comprenant l'excroissance 17 et de la machine électrique 29 pilotée par l'unité électronique 5 logée dans le boîtier 1.

Le logement interne 19 comprend au moins une rainure 31 dans laquelle vient se glisser et s'insérer la carte électronique secondaire 23 sur laquelle est disposée le composant électronique 21 de manière à bloquer le déplacement de ladite carte électronique secondaire 23 dans le plan X-Y. De préférence, le logement interne 19 comprend une paire de rainures 31 latérales situées en vis-à-vis l'une de l'autre et s'étendant selon l'axe secondaire transversal, par exemple l'axe Z de l'excroissance 17 du boîtier 1. La paire de rainures 31 entoure alors au moins partiellement les bords de la carte électronique secondaire 23. La carte électronique secondaire 23 peut également comprendre plusieurs largeurs différentes, par exemple deux largeur différentes et présenter une forme générale de T comme représenté sur la figure 3. Dans ce cas, le logement interne 19 comprend une première et une deuxième partie. La première partie a une largeur L1 inférieure à la largeur L2 de la deuxième partie et est disposée à une extrémité distale de l'excroissance 17, c'est-à-dire opposée à l'ouverture 22. Le logement interne 19 peut, par exemple, comprendre deux paires de rainures 31. Une première paire de rainures 31a, 31b séparées par une première largeur, la première paire de rainures étant disposée au niveau de la première partie du logement interne 19 ; et une deuxième paire de rainures 31c, 31d séparées par une deuxième largeur plus grande que la première largeur et disposée au niveau de la deuxième partie du logement interne 19 vers l'ouverture 22 de l'excroissance 17. De manière alternative, au lieu d'avoir une ou plusieurs paires de rainures 31 disposées en vis-à-vis, il est également possible de ménager un logement interne 19 comprenant une ou plusieurs rainures 31 sur un seul côté du logement interne 19 ce qui permet de bloquer le déplacement de la carte électronique secondaire 23 selon l'axe X, le déplacement selon l'axe Y étant bloqué par une paroi située de l'autre côté du logement interne 19, ladite paroi ne formant pas une rainure.

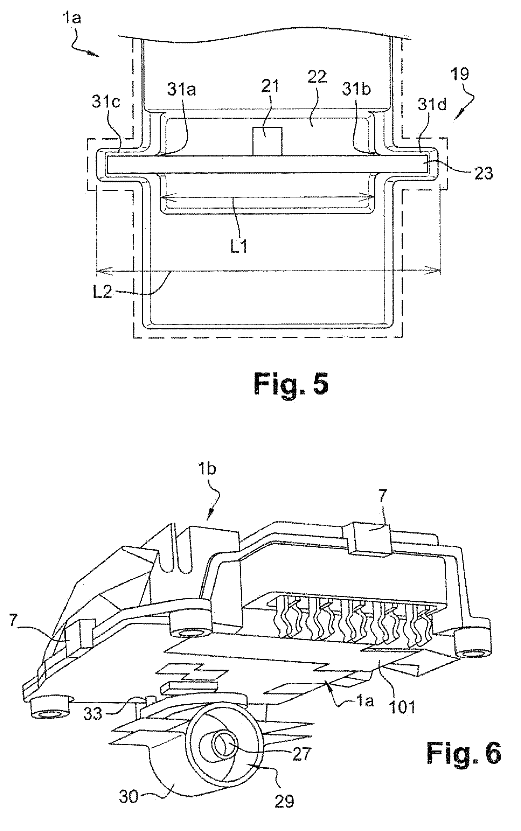

La figure 5 montre une vue de dessus, c'est-à-dire depuis l'ouverture 22, du logement interne 19 de l'excroissance 17 dans lequel est insérée la carte électronique secondaire 23 en forme de T. La première paire de rainures 31a, 31b est séparée par une première largeur correspondant à la première largeur L1 du logement interne 19 et la deuxième paire de rainures 31c, 31d est séparée par une deuxième largeur correspondant à la deuxième largeur L2 du logement interne 19. Le composant électronique 21 est placé sur une face de la carte électronique secondaire 23 à proximité de l'extrémité distale de l'excroissance 17.

Concernant la fixation de la carte électronique secondaire 23 selon l'axe Z, différentes solutions peuvent être envisagées.

Selon un premier mode de réalisation, la fixation selon l'axe Z de la carte électronique secondaire 23 peut se faire par collage. Par exemple, la colle est alors appliquée sur la tranche de la carte électronique secondaire orientée vers l'extrémité distale de l'excroissance 17. Dans le cas d'une carte électronique secondaire 23 comprenant plusieurs largeurs, la tranche comporte plusieurs parties situées à des hauteurs différentes de la carte électronique secondaire 23 et chacune des parties peut être encollée.

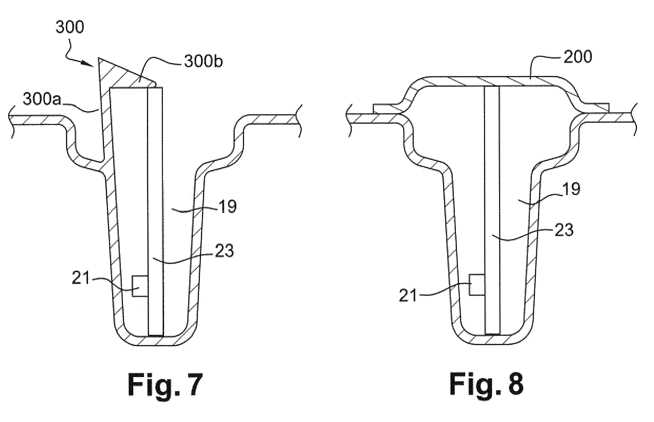

Selon un deuxième mode de réalisation illustré en figure 7, la fixation selon l'axe Z de la carte électronique secondaire 23 peut se faire par un ou plusieurs éléments d'encliquetage 300. Un élément d'encliquetage 300 est par exemple formé d'une partie flexible 300a comprenant un rebord 300b à son extrémité libre, ledit rebord 300b étant destiné à venir en prise avec la carte électronique secondaire 23 pour la maintenir en position dans le logement interne 19. La partie flexible 300a s'étend par exemple sensiblement selon la direction de l'axe Z de l'excroissance 17 et est déformée latéralement, c'est-à-dire selon le plan X-Y lors de l'insertion de la carte électronique secondaire 23 et vient contraindre le rebord 300b de l'extrémité libre de l'élément d'encliquetage sur la tranche de la carte électronique secondaire 23 orientée vers l'ouverture 22 du logement interne 19. L'élément d'encliquetage 300 est par exemple réalisé en plastique ou en métal et peut être fait de matière avec l'excroissance 17.

Selon un troisième mode de réalisation illustré en figure 8, la fixation selon l'axe Z de la carte électronique secondaire 23 peut se faire par une bride de fixation 200 destinée à être fixée de part et d'autre de l'ouverture 22 du logement interne 19 et à venir recouvrir la tranche de la carte électronique secondaire 23 orientée vers l'ouverture 22 du logement interne 19 pour maintenir la carte électronique secondaire 23 en position dans le logement interne 19. La bride de fixation 200 est par exemple réalisée en plastique ou en caoutchouc et peut être fixée aux parois de l'excroissance 17 ou du socle externe 101 du boîtier 1 par tout moyen connu de l'homme du métier.

Le boîtier 1 est par exemple réalisé en matière plastique ou en métal et l'excroissance 17 peut être faite de matière avec le reste du boîtier 1. Dans le cas d'un boîtier plastique, le boîtier peut être obtenu par injection et dans le cas d'un boîtier en métal, le boîtier peut être obtenu par moulage sous pression.

Selon un mode de réalisation de la présente invention illustré en figures 4 et 6, l'unité électronique 5 est configurée pour piloter une machine électrique 29, comme par exemple un moteur électrique, et le composant électronique 21 est un capteur configuré pour déterminer la position du rotor 27 de la machine électrique. Sur les figures 4 et 6, pour des raisons de lisibilité, seule une partie de la machine électrique 29 et une partie du châssis 30 de la machine électrique sont représentées. En particulier, la partie du rotor 27 représentée correspond à une portion de l'arbre de rotation du rotor 27. En figure 6, l'excroissance 17 est cachée derrière la partie de la machine électrique 29 qui est représentée.

Le boîtier de protection 1 de l'unité électronique 5 est fixé sur le châssis de la machine électrique 29. En particulier, pour des raisons d'encombrements, l'unité électronique 5 peut être positionnée de manière radiale par rapport à la machine électrique 29 notamment dans un plan parallèle et décalé par rapport à un axe de rotation de la machine électrique 29 comme représenté sur les figures 4 et 6. Dans ce cas, l'excroissance 17 fait saillie à l'extérieur du boîtier 1 vers le rotor 27 ou l'axe de rotation de la machine électrique 29. Le boîtier 1 est fixé sur le châssis 30 de la machine électrique 29 de manière à ce que l'excroissance 17 et en particulier le capteur 21, vienne en regard du rotor 27 de la machine électrique 29. Le rotor 27 est par exemple équipé d'un aimant de sorte que le capteur 21 détecte la position de l'aimant ce qui permet de déduire la position du rotor 27 et permettre à l'unité électronique 5 d'établir les commandes à appliquer à la machine électrique 29.

De plus, de manière à assurer un bon positionnement du capteur 21 par rapport au rotor 27 de la machine électrique 29 et permettre une détermination fiable de la position du rotor 27, le boîtier 1 peut comprendre des plots de positionnement 33 destinés à venir se placer dans des orifices complémentaires d'un support lié au châssis 30 de la machine électrique 29. Les plots de positionnement 33 sont par exemple placés de part et d'autre de l'excroissance 17 comme sur la figure 2 et ont une forme cylindrique ou conique. La figure 6 représente l'extrémité du rotor 27 de la machine électrique, en particulier l'extrémité de l'arbre de rotation du rotor 27, ainsi qu'une partie du châssis 30 de la machine électrique 29 comprenant les orifices complémentaires dans lesquels viennent se positionner les plots de positionnement 33 du boîtier 1. Les plots de positionnement 33 sont par exemple faits de matière avec le reste du boîtier 1.

De manière alternative, les plots de positionnement 33 peuvent également être placés sur le châssis 30 de la machine électrique 29 et les orifices complémentaires ménagés dans le boîtier 1.

Ainsi, l'utilisation d'un boîtier de protection 1 de l'unité électronique de commande 5 d'une machine électrique 29 comprenant une excroissance 17 munie d'un logement interne 19 pour accueillir un capteur de position du rotor 27 de la machine électrique 29 permet un montage radial de l'unité électronique 5 par rapport à la machine électrique 29 tout en assurant un bon positionnement du capteur 21. Ce positionnement est encore amélioré par l'utilisation de plots de positionnement 33. De plus, ce boîtier 1 permet de séparer la machine électrique 29 et l'unité électronique 5 et ainsi d'éviter toute projection de fluide entre la machine électrique 29 et l'unité électronique 5 et ainsi de protéger l'unité électronique 5 et notamment le capteur 21.

## Revendications

1. Boîtier (1) destiné à recevoir une unité électronique (5), ledit boîtier (1) comprenant un socle externe (101) s'étendant sensiblement dans un plan principal (X-Y), et une excroissance (17) faisant saillie, notamment vers l'extérieur du boîtier (1), hors du plan (X-Y) dudit socle externe (101), ladite excroissance (17) comprenant un logement interne (19) destiné à recevoir un composant (21) de l'unité électronique (5)
**caractérisé en ce que** le boîtier (1) comprend une ouverture (22) dans le socle externe (101) et au moins une rainure (31, 31a, 31b, 31c, 31d) destinée à recevoir une carte électronique secondaire (23) sur laquelle le composant (21) de l'unité électronique (5) est disposé, ladite carte électronique secondaire (23) venant se glisser dans la, au moins une, rainure (31, 31a, 31b, 31c, 31d).

2. Boîtier (1) selon la revendication 1 dans lequel l'excroissance (17) vient de matière avec le boîtier (1).

3. Boîtier (1) selon la revendication 1 ou 2 dans lequel l'excroissance (17) s'étend selon un plan secondaire transversal, notamment sensiblement perpendiculaire, par rapport au plan principal (X-Y).

4. Boîtier (1) selon l'une des revendications précédentes dans lequel le logement interne (19) comprend deux rainures (31a, 31b, 31c, 31d) disposées en vis-à-vis dans lesquelles viennent s'insérer les bords de ladite carte électronique secondaire (23).

5. Boîtier (1) selon l'une des revendications précédentes en combinaison avec la revendication 3 dans lequel la, au moins une, rainure (31, 31a, 31b, 31c, 31d) s'étend sensiblement selon le plan secondaire transversal.

6. Boîtier (1) selon l'une des revendications précédentes dans lequel le logement interne (19) comprend une première partie (31a, 31b) et une deuxième partie (31c, 31d), la première partie (31a, 31b) ayant une largeur (L1) inférieure à la largeur (L2) de la seconde partie, ladite première partie (31a, 31b) étant disposée vers l'extrémité distale de l'excroissance (17) du boîtier (1).

7. Unité électronique de commande (5) d'une machine électrique (29), ladite unité électronique de commande (5) comprenant un boîtier (1) selon l'une des revendications précédentes, un circuit électronique (9) et un composant (21) logés dans ledit boîtier (1), ledit composant (21) étant disposé dans le logement interne (21) de l'excroissance (17).

8. Unité électronique de commande (5) selon la revendication 7 dans laquelle le composant (21) est un capteur déporté par rapport au circuit électronique (9).

9. Unité électronique de commande (5) selon la revendication 8 dans laquelle le capteur est destiné à mesurer la position d'un rotor (27) de la machine électrique (29).

10. Unité électronique de commande (5) selon l'une des revendications 7 à 9 dans laquelle le composant (21) est implémenté sur une carte électronique secondaire (23) connectée au circuit électronique (9).

11. Unité électronique de commande (5) selon la revendication 10 dans laquelle la carte électronique secondaire (23) est fixée dans le logement interne (19) par collage.

12. Unité électronique de commande (5) selon la revendication 10 dans laquelle la carte électronique secondaire (23) est fixée dans le logement interne (19) par une bride de fixation (200).

13. Unité électronique de commande (5) selon la revendication 12 dans laquelle la bride de fixation (200) est destinée à être fixée de part et d'autre de l'ouverture (22) du logement interne (19) et à venir recouvrir la carte électronique secondaire (23) pour la maintenir en position dans le logement interne (19).

14. Unité électronique de commande (5) selon la revendication 10 dans laquelle la carte électronique secondaire (23) est fixée dans le logement interne (19) par un élément d'encliquetage (300).

15. Unité électronique de commande (5) selon la revendication 14 dans laquelle l'élément d'encliquetage (300) comprend une partie flexible (300a) comprenant un rebord (300b) à son extrémité libre, ledit rebord (300b) étant destiné à venir en prise avec la carte électronique secondaire (23) pour la maintenir en position dans le logement interne (19).

16. Ensemble comprenant une machine électrique (29) et une unité électronique de commande (5) selon l'une des revendications 7 à 15, ladite machine électrique (29) comprenant un châssis (30) et ladite unité électronique de commande (5) étant fixée sur le châssis (30) de ladite machine électrique (29).

17. Ensemble selon la revendication 16 dans lequel l'unité électronique de commande (5) est positionnée de manière radiale par rapport à la machine électrique (29) notamment dans un plan parallèle et décalé par rapport à un axe de rotation de la machine électrique (29).

18. Ensemble selon la revendication 16 ou 17 dans lequel l'excroissance (17) fait saillie vers un rotor (27) de la machine électrique (29).

19. Ensemble selon l'une des revendications 16 à 18, l'unité électronique étant selon la revendication 8, dans lequel la machine électrique (29) comprend un élément sensible placé au niveau d'un rotor (27) de ladite machine électrique (29) et dans lequel l'excroissance (17) s'étend vers l'axe dudit rotor (27) de sorte que le composant (21) est disposé en regard de l'élément sensible, ledit composant (21) étant un capteur configuré pour déterminer une position dudit élément sensible.
